# EUROPÄISCHE PATENTSCHRIFT

(11) **EP 1 436 177 B1**
(45) Veröffentlichungstag und Bekanntmachung des Hinweises auf die Patenterteilung: **30.08.2006**
(21) Anmeldenummer: 02750806.8
(22) Anmeldetag: 26.06.2002
(51) Int. Cl.: B60S 1/34

(54) **VERFAHREN ZUM HERSTELLEN EINES WISCHARMS**
METHOD FOR PRODUCING A WIPER ARM
PROCEDE DE FABRICATION D'UN BRAS D'ESSUIE-GLACE

(30) Priorität: 12.10.2001 DE 10150632
(43) Veröffentlichungstag der Anmeldung: 14.07.2004
(73) Patentinhaber: ROBERT BOSCH GMBH, 70442 Stuttgart (DE)
(72) Erfinder: KESSLER, Peter, 77880 Sasbach (DE)
(86) Internationale Anmeldenummer: PCT/DE2002/002321
(87) Internationale Veröffentlichungsnummer: WO 2003/035439

(56) Entgegenhaltungen:
- DE-A- 3 006 188
- FR-A- 2 720 708
- FR-A- 2 724 896
- US-A- 5 430 907

## Beschreibung

### Stand der Technik

Die Erfindung geht von einem Verfahren zum Herstellen eines Wischarms nach dem Oberbegriff des Anspruchs 1 aus. Ein derartiges Verfahren ist z.B. aus der DE-A-300 6188 bekannt.

Bekannte Scheibenwischer weisen einen Wischarm auf, der aus einem angetriebenen Befestigungsteil und einem mit diesem über ein Abklappgelenk verbundenen Gelenkteil mit einer Wischstange besteht. Am freien Ende der Wischstange ist ein Wischblatt angelenkt. Während der Schwenkbewegung des Scheibenwischers wird das Wischblatt über die Fahrzeugscheibe geführt, wobei eine Zugfeder das Abklappgelenk vorspannt, so dass das Wischblatt gegen die Fahrzeugscheibe gepresst wird. Ein erforderlicher Anpressdruck des Wischblatts wird maßgeblich durch die Vorspannkraft der Zugfeder bestimmt.

Die Zugfeder ist im U-förmigen Querschnittprofil des Gelenkteils untergebracht und mit einem Ende über einen C-förmigen Bügel an einer Federeinhängung, beispielsweise einem Querstift, am Befestigungsteil befestigt. Mit ihrem anderen

Ende ist die Zugfeder in einer Federeinhängung am Gelenkteil eingehängt, welche in der Regel durch ein Langloch in der Wischstange gebildet wird. Der Abstand zwischen den beiden Federeinhängungen weist ein bestimmtes Maß auf, um über die Einbaulänge der Zugfeder die erforderliche Vorspannkraft zu erzielen.

Der Wischarm wird in einer Einrichtung aus mehreren Teilen montiert, die als Einzelteile oder Baugruppen vorgefertigt wurden und ihre endgültige Form besitzen. In der Endmontage des Wischarms wird zunächst das Befestigungsteil mit dem Gelenkteil über das Abklappgelenk verbunden, während in einem folgenden Verfahrensschritt die Wischstange am Gelenkteil so befestigt wird, dass sich eine vorgegebene Gesamtlänge des Wischarms ergibt. Dazu besitzt das Gelenkteil an seinem freien Ende symmetrisch angeordnete Faltflächen. Diese werden nach dem Fügen der Wischstange umgebogen und umfassen einen mit Aussparungen versehenen Bereich der Wischstange, so dass beide Teile miteinander verkrimpt sind.

Die Länge des Wischarms ist ein wichtiges Funktionsmaß, welches bei der Montage eingehalten werden muss. Dieses Maß wird über ein Loch in der Wischstange eingestellt, indem die Wischstange mit dem Loch in einer entsprechenden Aufnahme der Montageeinrichtung mit einem definierten Einstellmaß fixiert wird. Durch diese Fixierung ist gleichzeitig die Position der Federeinhängung bestimmt, denn diese ist als Langloch an der Wischstange bereits vorhanden und besitzt einen fest gelegten Abstand zum Nietloch. Durch Toleranzen in der Fertigung des Wischarms als auch in der Fertigung der Zugfedern, ergeben sich teilweise erhebliche Unterschiede in der Vorspannkraft der Zugfeder und damit im Anpressdruck des Wischblatts, was sich auf das Wischergebnis auswirkt.

### Vorteile der Erfindung

Nach der Erfindung wird die Wischstange mit Übermaß gefertigt und bei der Montage der Wischstange wird an ihrem Ende, das dem Gelenkteil zugewandt ist, eine Längenkorrektur und ein Loch für eine Zugfeder angebracht, dessen Lage aus der Federcharakteristik einer einzubauenden Zugfeder bestimmt wird. Durch die der jeweiligen Zugfeder angepasste Einbaulänge werden die Toleranzen kompensiert, so dass die erzeugte Vorspannkraft einem gewünschten Wert sehr nah kommt. Da die Einbaulänge der Zugfeder erst nach dem Zusammenbau des Gelenkteils bestimmt wird, wird sie nicht von den Toleranzen betreffend die Gesamtlänge des Wischarms beeinflusst. Die Einzelteile des Wischarms können mit den üblichen Fertigungsverfahren hergestellt werden und es können leichter enge Toleranzen für die Gesamtlänge und Einbaulänge eingehalten werden.

Indem die Wischstange ein Übermaß aufweist, besteht genügend Spielraum zum Einbringen des Langlochs für die Zugfeder. Das Übermaß ist so gewählt, dass selbst ein Langloch mit der größten anzunehmenden Lageabweichung im Endbereich der Wischstange platziert ist. Entsprechend den individuellen Maßvorgaben wird das Langloch in einer Stanzvorrichtung ausgestanzt, wobei im Bedarfsfall zweckmäßigerweise gleichzeitig ein Teil der Überlänge abgetrennt wird, so dass die Zugfeder im montierten Zustand genügend Freiraum hat und nicht an der Wischstange anstößt. Ferner bleibt die Lage des .Lochs zum Einstellen der Wischarmlänge unverändert und der Wischarm wird im Übrigen nach bereits bekannten Technologien montiert.

Ein Vergleich einer größeren nach der Erfindung gefertigten Stückzahl von Wischarmen zeigte, dass die Streuung des Anpressdrucks des Wischblatts an der Fahrzeugscheibe bei Verwendung gleicher Toleranzen der Einzelteile wesentlich geringer ist, wodurch in einer Serie gleich gute Wischergebnisse erreicht werden. Zudem entsteht insgesamt kein größerer Fertigungsaufwand; da das Ausstanzen des Langlochs lediglich in der Reihenfolge der Verfahrensschritte in die Endmontage des Wischarms verschoben ist und dort problemlos integriert werden kann, besonders wenn der Wischarm in einer Montagelinie hergestellt wird.

Um die Zugfeder entsprechend der Federcharakteristik zu montieren sieht eine Weiterbildung der Erfindung vor, dass der Wischarm bei der Montage in einem Werkstückträger aufgenommen wird. In einem nächsten Verfahrensschritt wird die am Befestigungsteil montierte Zugfeder auf die erforderliche Nennkraft gespannt und nimmt dabei eine bestimmte Länge ein. Aus dieser Einbaulänge wird die Lage des Langlochs ermittelt, welches in einem unmittelbar folgenden Verfahrensschritt in die bereits zugeordnete Wischstange gestanzt wird. Als Alternative ist vorgesehen, dass die Istkennlinie der Zugfeder in der Montagelinie gemessen wird. Aus der Abweichung zu einem erforderlichen Nennwert wird dann ein Korrekturmaß für die genaue Position des Langlochs errechnet. Das Langloch wird dann unter Berücksichtigung des Korrekturwerts gestanzt.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Längsschnitt durch einen Wischarm in einer Betriebsstellung gemäß einer Linie I-I in Fig.2,
- Fig. 2: einen Wischarm von unten gesehen,
- Fig. 3: einen Längsschnitt durch eine ungekürzte Wischstange,
- Fig. 4: eine Wischstange nach Fig. 1 von unten gesehen und
- Fig. 5: ein Diagramm zur Darstellung der Abhängigkeit zwischen der Kraft und der Länge einer Zugfeder.

### Beschreibung der Ausführungsbeispiele

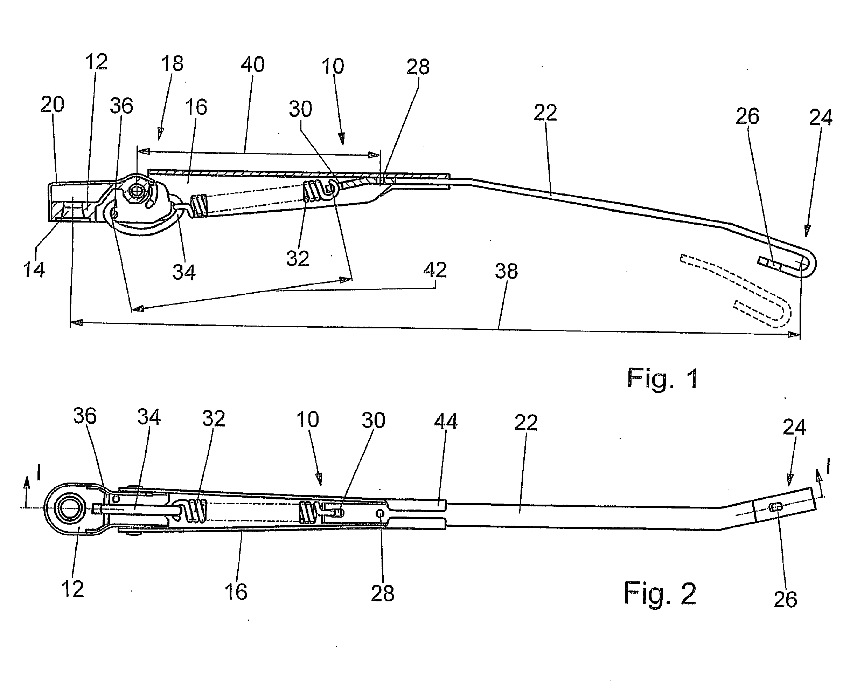

Ein Wischarm 10 ist aus einem Befestigungsteil 12, einem Gelenkteil 16 und einer Wischstange 22 aufgebaut (Fig.1, Fig. 2). Am Befestigungsteil 12 ist eine Aufnahmebohrung 14 für eine nicht dargestellte Antriebswelle angeordnet. Eine Kappe 20 überdeckt diesen Bereich und reicht bis zu einem Abklappgelenk 18, über welches das Befestigungsteil 12 mit dem Gelenkteil 16 verbunden ist. Zudem werden das Befestigungsteil 12 und das Gelenkteil 16 durch eine Zugfeder 32 gegeneinander verspannt. Die Zugfeder 32 ist an einem Ende über einen C-förmigen Bügel 34 an einem Ouerstift 36 eingehängt, der in Seitenwangen des Befestigungsteils 12 befestigt ist. Das andere Ende der Zugfeder 32 greift in ein Langloch 30 an der Wischstange 22, die durch eine Verkrimpung 44 fest mit dem Gelenkteil 16 verbunden ist. Dabei ist die Zugfeder 32 auf eine Länge 42 vorgespannt.

Um die Gesamtlänge 38 des Wischarms 10 zu bestimmen, wird die Wischstange 22 zum Abklappgelenk 18 in einer Montagevorrichtung fixiert gehalten. Das wird durch ein Loch 28 realisiert, welches als Montagehilfe dient und im fixierten Zustand ein Einstellmaß 40 zum Abklappgelenk 18 definiert.

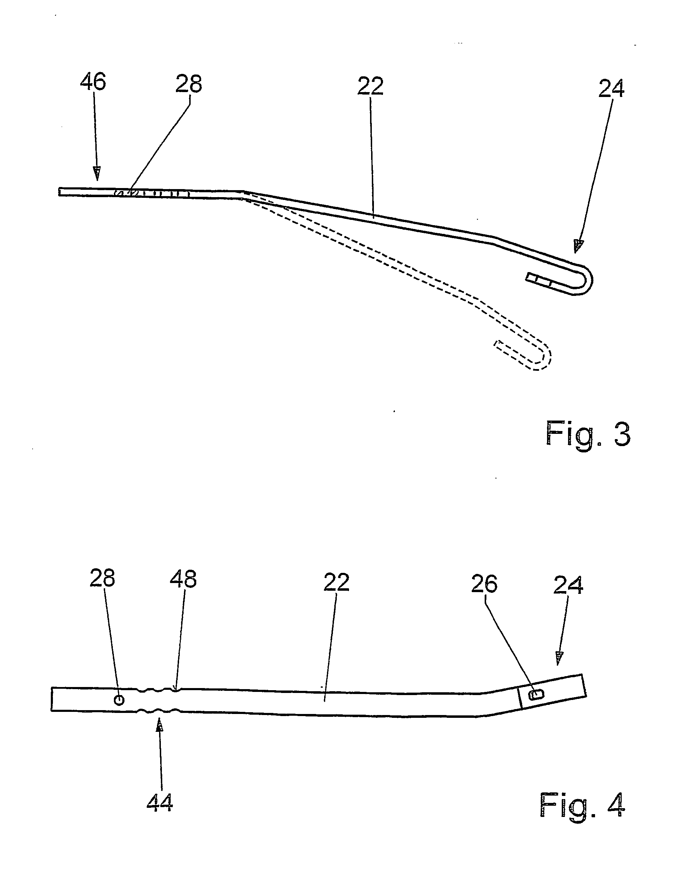

Die Wischstange 22 wird als Einzelteil vorzugsweise mit einem Stanz-Biegeverfahren gefertigt (Fig. 3, Fig. 4). Dabei wird erfindungsgemäß nur ein Teil der benötigten Formelemente hergestellt. Die vorgefertigte Wischstange 22 weist ein hakenförmiges Ende 24 mit einem Rastloch 26 zum Fixieren eines nicht dargestellten Adapters für ein Wischblatt auf. Das hakenförmige Ende 24 ist in einem entlasteten Zustand in Fig. 1 und Fig. 3 gestrichelt eingezeichnet. Zudem sind im Bereich der Verkrimpung 44 mehrere seitliche Aussparungen 48 und das Loch 28 ausgeformt, während das Ende 46 ein Übermaß aufweist und das Langloch 30 zum Einhängen der Zugfeder 32 noch nicht ausgestanzt ist.

Die Lage des Langlochs 30 wird nach der Erfindung aus der Federcharakteristik der einzubauenden Zugfeder 32 bestimmt. In einem Verfahren wird der Wischarm 10 bei der Montage in einem Werkzeugträger aufgenommen und eine zugeordnete Zugfeder 32 wird auf die erforderliche Nennkraft vorgespannt. Aus der individuellen Länge 42 der Zugfeder 32 beim Einwirken der Kraft wird die Lage des Langlochs 30 ermittelt, welches in einem nachfolgenden Verfahrensschritt in einer Stanzeinrichtung in die zugeordnete Wischstange 22 gestanzt wird. Zudem wird das Ende 46 entsprechend der Lage des Langlochs 30 so gekürzt, dass ein annähernd gleicher Abstand zwischen dem Langloch 30 und der Stirnfläche am Ende 46 der Wischstange 22 gewährleistet ist.

Ein weiteres Verfahren der Erfindung sieht vor, dass die Zugfeder 32 bezüglich ihrer Istkennlinie gemessen und ihre untere und obere Abweichung 58, 60 ermittelt wird, aus der ein Korrekturmaß für die Lage des Langlochs 30 errechnet wird.

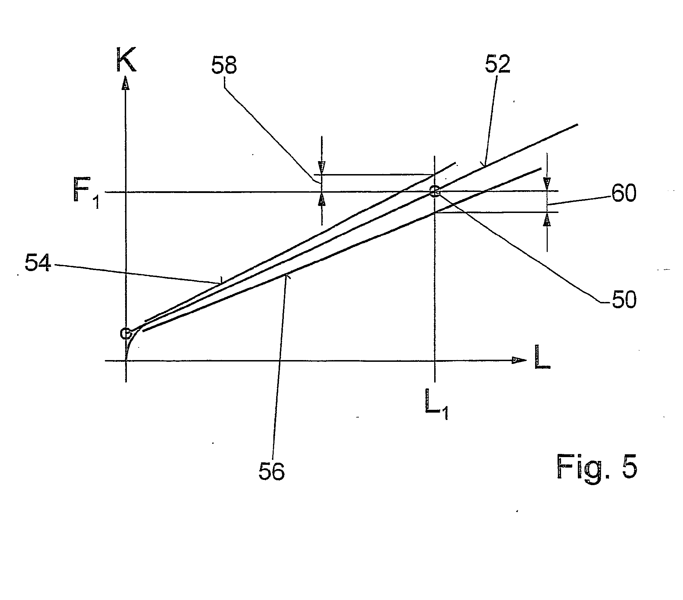

Fig. 5 zeigt ein entsprechendes Diagramm. Als Ordinate ist die Kraft K und als Abszisse die Länge L einer Zugfeder 32 angegeben. Zudem sind im Diagramm die Federkennlinie 52 für eine Zugfeder 32 mit Nennmaß, die Federkennlinie 54 für die obere Toleranzgrenze und die Federkennlinie 56 für die untere Toleranzgrenze eingezeichnet. Im Arbeitspunkt 50 ist eine Zugfeder 32 mit Nennmaß auf eine Länge L₁ vorgespannt und weist eine Kraft F₁ auf, welche der erforderlichen Nennkraft entspricht. Wird eine Zugfeder 32 mit der Federkennlinie 54 ebenfalls auf eine Länge L₁ vorgespannt, ergibt sich eine obere Abweichung 58 zur Kraft F₁, während eine Zugfeder 32 mit einer Kennlinie 56 eine untere Abweichung 60 zur Nennkraft F₁ aufweist. Eine konstante Kraft F₁ wird bei Zugfedern 32 mit Toleranzen durch eine variable Länge erreicht, welche der Länge 42 in Fig. 1 entspricht. Das Korrekturmaß für die Lage des Langlochs 30 wird berechnet, indem entweder das obere Abmaß 58 oder das untere Abmaß 60 durch die Federkonstante der Zugfeder 32 dividiert wird.

## Patentansprüche

1. Verfahren zum Herstellen eines Wischarms (10) aus mehreren Einzelteilen, nämlich einem Befestigungsteil (12), einem Gelenkteil (16) und einer Wischstange (22), wobei zunächst das Befestigungsteil (12) mit dem Gelenkteil (16) über ein Abklappgelenk (18) verbunden und danach die Wischstange (22) am Gelenkteil (16) befestigt wird, **dadurch gekennzeichnet, dass** die Wischstange (22) mit Übermaß gefertigt wird und bei der Montage der Wischstange (22) an ihrem Ende (46), das dem Gelenkteil (16) zugewandt ist, eine Längenkorrektur und ein Loch für eine Zugfeder (32) angebracht wird, dessen Lage aus der Federcharakteristik einer einzubauenden Zugfeder (32) bestimmt wird.

2. Verfahren nach Anspruch 1, **dadurch gekennzeichnet, dass** der Wischarm (10) bei der Montage in einem Werkstückträger aufgenommen wird, die Zugfeder (32) auf die erforderliche Nennkraft gespannt wird und aus der Länge der Zugfeder (32) bei der Nennkraft die Lage des Lochs (30) ermittelt wird.

3. Verfahren nach Anspruch 1, **dadurch gekennzeichnet, dass** die Zugfedern (32) in der Montagelinie bezüglich ihrer Istkennlinie gemessen und ihre unteren und oberen Abweichungen (58, 60) ermittelt werden, aus denen ein Korrekturmaß für die Lage des Lochs (30) errechnet wird.

## Claims

1. Method for producing a wiper arm (10) from a plurality of individual parts, namely a fastening part (12), an articulated part (16) and a wiper rod (22), first of all the fastening part (12) being connected to the articulated part (16) via a fold-down joint (18) and then the wiper rod (22) being fastened to the articulated part (16), **characterized in that** the wiper rod (22) is manufactured with an excess length and, when the wiper rod (22) is installed, its end (46) which faces the articulated part (16) is provided with a length correction and a hole for a tension spring (32), the position of which hole is determined from the spring characteristic of a tension spring (32) to be fitted.

2. Method according to Claim 1, **characterized in that**, during the installation, the wiper arm (10) is held in a workpiece carrier, the tension spring (32) is tensioned to the required nominal force and the position of the hole (30) is determined from the length of the tension spring (32) at the nominal force.

3. Method according to Claim 1, **characterized in that** the tension springs (32) are measured with regard to their actual characteristic curve on the production line and their lower and upper deviations (58, 60) are determined from which a correction measurement for the position of the hole (30) is calculated.

## Revendications

1. Procédé de fabrication d'un bras d'essuie-glace (10) composé de plusieurs pièces, à savoir une pièce de fixation (12), une pièce d'articulation (16) et une tige d'essuie-glace (22), selon lequel
on relie tout d'abord la pièce de fixation (12) à la pièce d'articulation (16) par l'intermédiaire d'une articulation de rabattement (18) et ensuite on fixe la tige d'essuie-glace (22) à la pièce d'articulation (16),
**caractérisé en ce qu'**
on surdimensionne la tige d'essuie-glace (22) et lors du montage de la tige d'essuie-glace (22) à son extrémité (46) tournée vers la pièce d'articulation (16), on corrige en longueur et on réalise un orifice pour un ressort de traction (32), la position de cet orifice étant définie à partir de la caractéristique du ressort de traction à installer.

2. Procédé selon la revendication 1,
**caractérisé en ce qu'**
au montage on place le bras d'essuie-glace (10) dans un support de pièce, on tend le ressort de traction (32) à la force nominale requise et on détermine la position de l'orifice (30) à partir de la longueur du ressort de traction (32) à la force nominale.

3. Procédé selon la revendication 1,
**caractérisé en ce qu'**
on mesure la caractéristique réelle des ressorts de traction (32) dans la ligne de montage et on détermine leur déviation inférieure et supérieure (58, 60) à partir desquelles on calcule une mesure de correction pour la position de l'orifice (30).
